# EUROPÄISCHE PATENTANMELDUNG

(11) **EP 1 518 871 A2**
(43) Veröffentlichungstag der Anmeldung: **30.03.2005**
(21) Anmeldenummer: 04021780.4
(22) Anmeldetag: 14.09.2004
(51) Int. Cl.: C08G 18/08, C09D 175/06

(54) **Wässrige Einbrennlacke**

(30) Priorität: 24.09.2003 AT 15122003
(71) Anmelder: Surface Specialties Austria GmbH, 8402 Werndorf (AT)
(72) Erfinder: Schafheutle, Markus Dr., 8044 Graz (AT); Burkl, Julius, 8053 Graz (AT); Arzt, Anton, 8430 Neutillmitsch (AT); Petritsch, Gerlinde, 8054 Graz (AT); Jedlicka, Rudolf Dr., 2700 Wiener Neustadt (AT); Wango, Jörg, 8142 Wundschuh (AT)
(74) Vertreter: Deckers, Hellmuth, A., Dr.

(57) **Zusammenfassung**

Wäßrige Einbrennlacke enthaltend Harze **A**, die Hydroxylgruppen aufweisen und durch teilweise neutralisierte Säuregruppen hydrophilisiert sind, und hochverätherte Aminoplaste **B**, dadurch gekennzeichnet, daß die wäßrigen Lösungen oder Dispersionen des Harzes einen pH-Wert von 6 oder darunter aufweisen, ein Verfahren zu deren Herstellung und deren Verwendung zum Beschichten von thermisch empfindlichen Substraten

## Beschreibung

Die Erfindung betrifft wäßrige Einbrennlacke.

Wäßrige Lacke enthalten Harze, die durch ionische (anionische oder kationische) oder nichtionische Stabilisierung in Wasser stabile Lösungen oder Dispersionen bilden. Die Harze, die nicht rein physikalisch trocknen (d. i. ohne Zusatz eines Härters nach Entfernen des Lösungs- oder Dispergiermittels einen Film bilden, der lediglich durch physikalische Wechselwirkungen wie Dispersions- oder van der Waals-Wechselwirkungen oder durch Wasserstoffbrückenbindungen vernetzt ist), sondern chemisch trocknen, d. h. durch Reaktion mit einem Härter oder Vernetzungsmittel, weisen weiter reaktive Gruppen auf, die bei dem Härtungsvorgang mit dem Härter unter Bildung von kovalenten Bindungen vernetzen. Bei Einbrennlacken setzt diese Vernetzung erst bei höheren Temperaturen ein; daher können in diesem Fall Gemische von Harz und Härter bei Zimmertemperatur längere Zeit vor der Verarbeitung hergestellt und gelagert werden. Der Härter muß entweder erst bei höherer Temperatur reaktiv werden oder durch Schutzgruppen soweit desaktiviert werden, daß bei Lagerung keine vorzeitige Vernetzungsreaktion abläuft.

Es ist erwünscht, bei diesen Einbrennlacken die Vernetzungstemperatur zu erniedrigen (und dadurch bei der thermischen Vernetzung Zeit und/oder Energie einzusparen), ohne jedoch die Lagerfähigkeit negativ zu beeinflussen.

Wird zum Vernetzen ein verätherter Aminoplasthärter eingesetzt, der mit Hydroxylgruppen-haltigen Harzen unter Umätherung und Bildung von N-Methylenäther-Bindungen reagiert, so ist die Gegenwart von Säuren als Katalysator erforderlich. Erst unter saurer Katalyse kann die Umätherung ablaufen. Bei wasserverdünnbaren anionisch stabilisierten Harzen, die durch den Einbau von Säuregruppen und zumindest teilweise Neutralisation dieser Säuregruppen hydrophil modifiziert sind, werden meist Amine zur Neutralisation eingesetzt. Diese Amine müssen zu einem Großteil den zu vernetzenden Lackfilm verlassen haben, damit die als Katalysator eingesetzte Säure wirksam werden kann. Bei niedrigeren Temperaturen (unter 100 °C) ist die Flüchtigkeit der zur Neutralisation eingesetzten Amine jedoch noch gering, daher kann die Härtungsreaktion bei diesen Temperaturen noch nicht einsetzen.

Es wurde nun gefunden,' daß durch Kombination von solchen wasserverdünnbaren Hydroxylgruppen-haltigen Harzen, die eine ausreichende Art und/oder Anzahl von sauren Gruppen aufweisen, und die gleichzeitig in der Lage sind, den Aminoplasthärter wirksam in dem Gemisch von Harz und Wasser zu emulgieren, mit hochverätherten Aminoplasten mit niedrigem Polymerisationsgrad Bindemittel für Einbrennlacke bereitgestellt werden können, die bereits bei Temperaturen von unter 100 °C, insbesondere bei Temperaturen von 75 °C bis 98 °C, zu mechanisch und chemisch beständigen Beschichtungen gehärtet werden können.

Die Erfindung betrifft daher wäßrige Einbrennlacke enthaltend Harze **A,** die Hydroxylgruppen aufweisen und durch teilweise neutralisierte Säuregruppen hydrophilisiert sind, und hochverätherte Aminoplaste **B,** wobei die wäßrigen Lösungen oder Dispersionen des Harzes einen pH-Wert von 6 oder darunter aufweisen müssen. Das Harz **A** wirkt dabei als Emulgator für das Aminoplastharz **B** in Wasser. Bevorzugt beträgt der zahlenmittlere Polymerisationsgrad der Aminoplastharze **B** maximal 1,8, bevorzugt maximal 1,5, und insbesondere maximal 1,3.

Der pH-Wert wird dabei in einer Lösung oder Dispersion enthaltend 5 g des neutralisierten Harzes in 100 g der wäßrigen Lösung oder Dispersion bestimmt.

Die Emulgatorwirkung läßt sich dadurch nachweisen, daß in dem wäßrigen System aus Harz A und Aminoplasthärter **B** in Wasser keine emulgierten Teilchen nachweisen lassen, die lediglich das Aminoplastharz enthalten, sondern daß vielmehr nur emulgierte Tröpfchen vorliegen, die zumindest einen Massenanteil von 5, bevorzugt von 10 % des Harzes **A** enthalten.

Bevorzugt werden als Harze **A** solche verwendet, die Säuregruppen abgeleitet von organischen Sulfonsäuren oder Schwefelsäure-Halbestern aufweisen. Organische Sulfonsäuren entsprechen der Formel R-SO₂-OH, und Schwefelsäurehalbester entsprechen der Formel R-O-SO₂-OH, wobei R jeweils ein organischer Rest ist. Über den Rest R bzw. eine funktionelle Gruppe an diesem Rest wird die Säurefunktionalität in das Harz **A** eingebaut. In ähnlicher Weise lassen sich auch Phosphonsäuregruppen oder Phosphorsäure-Teilester mit mindestens einem verbliebenen aciden Wasserstoffatom einbauen. Es ist auch möglich, Carbonsäuregruppen einzubauen, wobei es in diesem Fall bevorzugt ist, die Acidität durch elektronenabziehenden Gruppen in der Nachbarschaft der Carboxylgruppe zu erhöhen. Solche elektronenabziehenden Gruppen sind bekanntermaßen z. B. Chlor-, Nitro- und Sulfon-Gruppen.

Geeignete Harze **A** sind solche, die funktionelle Gruppen aufweisen, die mit den Aminoplasthärtern unter Umätherung reagieren und dadurch gehärtet werden. Bevorzugt sind solche Harze, die Hydroxylgruppen als funktionelle Gruppen enthalten. Es lassen sich jedoch auch Harze mit Mercaptangruppen oder Harze mit NH-Gruppen, die nicht basisch sind (z. B. Amidgruppen) einsetzen, wobei derartige reaktive Gruppen bevorzugt gemeinsam mit Hydroxylgruppen in dem Harz vorliegen. Besonders bevorzugt werden als Harze **A** Polyurethane, da sich Sulfonsäuregruppen und/oder Phosphonsäuregruppen in diese auf einfachem Weg einführen lassen. Es ist jedoch auch möglich, in andere Harze, insbesondere Alkydharze, Polyesterharze und Epoxidharze, die genannten saueren Gruppen einzubauen.

Die Hydroxylgruppen-haltigen Harze **A** haben bevorzugt eine Hydroxylzahl von 5 mg/g bis 120 mg/g, besonders bevorzugt von 10 mg/g bis 100 mg/g, ihre von Carbonsäuregruppe herrührende Säurezahl beträgt bevorzugt von 0,5 mg/g bis 50 mg/g, besonders bevorzugt von 5 mg/g bis 40 mg/g.

Geeignete Hydroxylgruppen-haltige Harze **A** sind Polykondensationsharze, insbesondere Polyesterharze **A1,** Polyadditionsharze wie Polyurethane **A2,** und Polymerisationsharze wie Acrylatcopolymere **A3.**

Geeignete Polyester **A1** leiten sich ab von aliphatischen linearen, verzweigten oder cyclischen Polyhydroxyverbindungen **A11,** insbesondere Dihydroxyverbindungen, und aromatischen oder aliphatischen linearen, verzweigten oder cyclischen Polycarbonsäuren **A12,** insbesondere Dicarbonsäuren. Dabei können die Dicarbonsäuren und die Dihydroxyverbindungen auch durch Hydroxycarbonsäuren **A13** ersetzt sein, insbesondere durch aliphatische lineare und durch aromatische Hydroxycarbonsäuren wie Hydroxybuttersäure, Hydroxyvaleriansäure, Hydroxycapronsäure und Hydroxybenzoesäure. Dabei können jeweils bis zu 10 % der Masse der Hydroxyverbindungen **A11** und der Carbonsäuregruppen-haltigen Verbindungen **A12** drei oder mehr funktionelle Gruppen enthalten. Selbstverständlich ist es dabei möglich, daß Dihydroxyverbindungen mit einer zusätzlichen Säurefunktion oder Dicarbonsäuren mit einer zusätzlichen Hydroxylgruppe eingesetzt werden. Derartige Verbindungen sind beispielsweise Bishyclioxymethylpropionsäure, Weinsäure und Dihydroxybenzöesäure.

Geeignete Polyurethane **A2** sind insbesondere Polyesterurethane, die Bausteine abgeleitet von Polyesterpolyolen **A21,** gegebenenfalls niedermolekularen Polyolen **A22,** mehrfunktionellen Isocyanaten **A23** und Verbindungen **A24** enthalten, die mindestens eine gegenüber Isocyanaten reaktive Gruppe ausgewählt aus Hydroxylgruppen, Aminogruppen und Mercaptangruppen enthalten, sowie mindestens eine Säuregruppe ausgewählt aus Sulfonsäuregruppen, Schwefelsäurehalbester-Gruppen, Phosphonsäuregruppen und Phosphorsäureteilestergruppen mit jeweils mindestens einem aciden Wasserstoffatom, und Carbonsäuregruppen, die durch elektronegative Gruppen in der Nachbarschaft aktiviert sind, wie beispielsweise α-Ketosäuren oder α, α -Dichlorcarbonsäuren. Es können auch Mischungen unterschiedlicher Säuregruppen vorliegen.

Polyurethane, die für die Erfindung geeignet sind, werden bevorzugt in einem zweistufigen Verfahren hergestellt, wobei die sauren Gruppen in der zweiten Stufe durch Umsetzung eines mit Isocyanatgruppen terminierten Präpolymeren mit den die sauren Gruppen tragenden Verbindungen eingeführt werden. Vorteilhafterweise läßt sich dieser Schritt mit der Kettenverlängerung kombinieren. Die mit Isocyanatgruppen terminierten Präpolymeren werden auf die bekannte Weise durch Umsetzung von Polyolen mit mehrfunktionellen Isocyanaten erhalten, wobei die letzteren im stöchiometrischen Überschuß verwendet werden.

Geeignete Polyacrylatharze **A3** sind Copolymerisate von olefinisch ungesättigten Monomeren **A31,** die Carbonsäuregruppen enthalten, olefinisch ungesättigten Monomeren **A32,** die Hydroxylgruppen enthalten, und olefinisch ungesättigten Monomeren **A33,** die weder Hydroxylgruppen noch Säuregruppen enthalten, und die ausgewählt sind aus Estern von aliphatischen linearen, verzweigten oder cyclischen Alkoholen mit 1 bis 20 Kohlenstoffatomen und olefinisch ungesättigten Carbonsäuren mit 3 bis 10 Kohlenstoffatomen oder olefinisch ungesättigten Dicarbonsäuren mit 4 bis 10 Kohlenstoffatomen. Weitere geeignete Monomere **A33** sind Ester von aliphatischen linearen, verzweigten oder cyclischen Monocarbonsäuren mit 2 bis 20 Kohlenstoffatomen mit olefinisch ungesättigten Alkoholen.

Wenn gemäß einer bevorzugten Ausführungsform Polyurethanharze als Harze **A** verwendet werden, so wird mit Vorteil ein Verfahren angewendet, bei dem in einer ersten Stufe ein Hydroxylgruppen enthaltender Polyester hergestellt wird, der in der zweiten Stufe mit einer Verbindung vermischt wird, die mindestens zwei gegenüber Isocyanat reaktive Gruppen und mindestens eine anionogene Gruppe aufweist, und diese Mischung mit einem Überschuß an mehrfunktionellen Isocyanaten reagiert wird, und in der dritten Stufe das isocyanatfunktionelle Produkt der zweiten Stufe unter Verbrauch der Isocyanatgruppen mit einer Verbindung umgesetzt wird, die mindestens einen Sulfonsäuregruppe oder eine Schwefelsäurehalbestergruppe und mindestens eine gegenüber Isocyanaten reaktive Gruppe aufweist, und anschließender Neutralisation und Dispergierung des erhaltenen Harzes in Wasser.

Die erfindungsgemäßen Einbrennlacke lassen sich zur Beschichtung von Substraten aller Art verwenden; insbesondere sind sie natürlich geeignet für solche Substrate, die wegen der bisher erforderlichen hohen Einbrenntemperaturen für Ein-Komponenten-Systeme nur mit Zwei-Komponentensysteme beschichten ließen. Dies sind vor allem thermoplastische Kunststoffe, Papiere und Karton sowie Textilien wie Gewebe, Vliese, Gewirke und Gestricke aus thermoplastischen Fasern.

Die Erfindung wird durch die nachfolgenden Beispiele erläutert.

### Beispiele:

### Vorstufe:

In einem Glaskolben mit Destillationseinrichtung wurden 11 g Diäthylenglykol, 18 g 1,4-Butandiol, 16,4 g Glykol und 72 g Adipinsäure vorgelegt und langsam auf 220 °C erhitzt. Ab etwa 140 °C konnte man beobachten, daß Wasser abdestillierte. Das Reaktionswasser wurde so lange mit steigender Temperatur und nach Erreichen der maximalen Temperatur bei dieser abdestilliert, bis die Säurezahl unter 10 mg/g gefallen war. Danach wurde unter vermindertem Druck so lange weiterdestilliert, bis die Säurezahl unter 2 mg/g gefallen war. Anschließend wurde Glykol in einer solchen Menge zugegeben, und bei 230 °C unter Rückflußbedingungen 2 Stunden gehalten, bis die OH-Zahl einen Wert von 50 mg/g erreichte. Man erhielt eine bei Raumtemperatur flüssige, klare Harzschmelze.

### Erfindungsgemäße PU-Dispersion A (PUD A):

100 g des Harzes der Vorstufe wurden mit 8 g N-Methylpyrrolidon, 1,5 g Dimethylolpropionsäure und 22,2 g Methylisobutylketon (MIBK) gemischt und bei 40 °C so lange gerührt, bis alle Komponenten homogen gelöst waren. Zu dieser Lösung wurde eine Mischung, bestehend aus 10,4 g ®Desmodur N 3300 (Bayer AG, trimeres 1,6-Diisocyanatohexan) und 25,5 g (monomeres) 1,6-Diisocyanatohexan zugegeben. Es zeigt sich eine schwache Wärmetönung. Diese Mischung wurde so lange bei dieser Temperatur gehalten, bis der Massenanteil an Isocyanat (Masse der Isocyanatgruppen -N=C=O, dividiert durch die Masse des gelösten Feststoffanteils) unter 3,2 % gefallen war. Zu dieser Lösung wurde eine Mischung aus 9,9 g Natriumtaurinat in Wasser (40 %ig) und 11,6 g Diäthanolamin gegeben. Es wurde so lange weiter gerührt, bis eine homogene Masse entstanden war. Dabei fiel der Massenanteil an Isocyanatgruppen auf Null. Die Harzlösung wurde in 248,7 g Wasser dispergiert, das azeotrope MIBK-Wasser-Gemisch wurde abdestilliert. Die entstandene Dispersion wurde durch weitere Zugabe von entionisiertem Wasser auf einen Festkörper-Massenanteil von 40 % eingestellt. Die entstandene Polyurethandispersion hatte einen pH-Wert von ca. 5,5 und eine Hydroxylzahl von 79 mg/g.

### Vergleichsbeispiel PU-Dispersion B (PUD B):

102,2 g des Harzes der Vorstufe wurde zusammen mit 1 g Diäthylenglykol, 6,2 g Dimethylolpropionsäure und 33 g N-Methylpyrrolidon in einem Glaskolben vorgelegt und durch Rühren bei 40 °C homogen gelöst. In die klare Lösung wurden 34 g 1,6-Diisocyanatohexan gegeben, die Mischung wurde so lange bei 40 °C gehalten, bis der Massenanteil an Isocyanatgruppen unter 4,2 % gefallen war. Nach Zugabe von 9,6 g Diäthanolamin wurde weitergerührt, bis der Massenanteil an Isocyanatgruppen auf Null gefallen war. Die Säure wurde mit 3,3 g Dimethyläthanolamin neutralisiert und die Harzlösung in 248,7 g entionisiertem Wasser dispergiert. Man erhielt eine Dispersion mit einem Festkörper-Massenanteil von 33 % und einem pH-Wert von 7,8.

### Melamin-Formaldehyd-Harz-Vernetzung

Zu je 100 g o.g. PU-Dispersionen A und B wurden 30 g hochreaktives MF-Harz vom HMMM-Typ (®Resimene CE 7.103, Solutia Inc.) und 0,3 g p-Toluolsulfonsäure zugegeben. Die homogenisierte Mischung wurde mit einem 200 µm Aufziehwürfel auf eine Glasplatte gestrichen. Nach kurzem Ablüften bei Raumtemperatur wurde der Film 30 min bei 80 °C getrocknet. Es bildete sich ein gegen Lösungsmittel beständiger Film.

### Lösungsmittel-Beständigkeit: (Zeit bis zur sichtbaren Veränderung der Oberfläche des Lackes bei Kontakt mit dem betreffenden Lösungsmittel)

| Lösemittel. | PUD A mit MF-Harz | PUD A ohne MF-Harz | PUD B mit MF-Harz |
|---|---|---|---|
| Aceton | 10 s | 2 s | 1 s |
| Xylol | 30 s | 2 s | 1 s |
| Wasser | 100 s | 11 s | 5 s |

### Eigenschaften des gebildeten Films:

| | | | |
|---|---|---|---|
| Oberfläche | glatt | glatt | klebrig |

## Patentansprüche

1. Wäßrige Einbrennlacke enthaltend Harze **A**, die Hydroxylgruppen aufweisen und durch teilweise neutralisierte Säuregruppen hydrophilisiert sind, und hochverätherte Aminoplaste **B**, **dadurch gekennzeichnet, daß** die wäßrigen Lösungen oder Dispersionen des Harzes einen pH-Wert von 6 oder darunter aufweisen.

2. Wäßrige Einbrennlacke nach Anspruch 1, **dadurch gekennzeichnet, daß** die Harze **A** Säuregruppen abgeleitet von organischen Sulfonsäuren oder Schwefelsäure-Halbestern aufweisen.

3. Wäßrige Einbrennlacke nach Anspruch 1, **dadurch gekennzeichnet, daß** der zahlenmittlere Polymerisationsgrad der Aminoplaste **B** unter 1,8 beträgt.

4. Wäßrige Einbrennlacke nach Anspruch 1, **dadurch gekennzeichnet, daß** die Harze **A** eine Hydroxylzahl von 5 mg/g bis 120 mg/g aufweisen.

5. Wäßrige Einbrennlacke nach Anspruch 1, **dadurch gekennzeichnet, daß** die Harze **A** eine Säurezahl von 0,5 mg/g bis 50 mg/g aufweisen.

6. Wäßrige Einbrennlacke nach Anspruch 1, **dadurch gekennzeichnet, daß** die Harze **A** Polyurethanharze sind.

7. Wäßrige Einbrennlacke nach Anspruch 6, **dadurch gekennzeichnet, daß** die Harze **A** Polyesterurethane sind.

8. Verfahren zur Herstellung von wäßrigen Einbrennlacken nach Anspruch 7, **dadurch gekennzeichnet, daß** in einer ersten Stufe ein Hydroxylgruppen enthaltender Polyester hergestellt wird, der in der zweiten Stufe mit einer Verbindung vermischt wird, die mindestens zwei gegenüber Isocyanat reaktive Gruppen und mindestens eine anionogene Gruppe aufweist, und diese Mischung mit einem Überschuß an mehrfunktionellen Isocyanaten reagiert wird, und in der dritten Stufe das isocyanatfunktionelle Produkt der zweiten Stufe unter Verbrauch der Isocyanatgruppen mit einer Verbindung umgesetzt wird, die mindestens einen Sulfonsäuregruppe oder eine Schwefelsäurehalbestergruppe und mindestens eine gegenüber Isocyanaten reaktive Gruppe aufweist, und anschließender Neutralisation und Dispergierung des erhaltenen Harzes in Wasser.

9. Verfahren nach Anspruch 8, **dadurch gekennzeichnet, daß** in der dritten Stufe Taurin oder ein Salz des Taurins eingesetzt wird.

10. Verwendung von wäßrigen Einbrennlacken nach Anspruch 1 zum Beschichten von thermoplastischen Kunststoffen, Papier, Karton oder Textilien.
